Europäisches Patentamt

European Patent Office

Office européen des brevets

(11) Publication number: **0 610 978 A1**

## (12) EUROPEAN PATENT APPLICATION

(21) Application number: **94200130.6**

(22) Date of filing: **20.01.94**

(51) Int. Cl.5: **B23C 5/00**, B23C 5/08, B27G 13/00

(30) Priority: **26.01.93 ES 9300132**

(43) Date of publication of application:
**17.08.94 Bulletin 94/33**

(84) Designated Contracting States:
**DE FR GB IT PT**

(71) Applicant: **HERMADE, S.L.**
**San Martin, 5**
**E-46970 Alacuas (Valencia) (ES)**

(72) Inventor: **Kuper Ema, Alejandro**
**Avda. Gola del Puchol, 4-18**
**El Saler (Valencia) (ES)**

(74) Representative: **Ungria Lopez, Javier et al**
**Avda. Ramon y Cajal, 78**
**E-28043 Madrid (ES)**

(54) **Improvements introduced in the manufacture of milling cutters.**

(57) Milling cutters are of the type formed by a plurality of modules or discs supporting the respective cutting elements (5) located in the ends of the radial arms (3) defined between the cuts (4) of the periphery.

The different modules are juxtaposed upon having cotter ways (6) that are displaced anglewise, in a α angle whose value is defined by the ratio:

$\alpha = \pm 180/Z (1 + 2n)$, wherein

Z = number of cuts or arms of the module

n = any whole number

being displaced in order to progressively cut the corresponding area of the section to be milled. This section may be straight, curvilinear or combined, indistinctly.

FIG. 1

EP 0 610 978 A1

Rank Xerox (UK) Business Services
(3.10/3.09/3.3.4)

## OBJECT OF THE INVENTION

As is expressed in the title of this specification, the present invention refers to some improvements introduced in the manufacture of milling cutters, therefore providing a series of relevant and advantageous features over milling cutters presently used to mechanize pieces.

In accordance with the invention, the following advantages are achieved:

- It is possible to manufacture in series milling cutters with which a complex section in the mechanized piece is to be achieved, given that the section is obtained by means of juxtaposed modules and by profiling the blades according to the section to be milled, whatever its geometric shape is.
- Important reduction of manufacturing time and labor, which determines that the delivery time is considerably improved.
- The modules are manufactured from standardized metal sheets and therefore the present special thicknesses that are required as raw material disappear.
- The section of the milling cutter can be modified at any time, by varying the modules thereof.
- If a module is dented one need only replace it by another one.
- This system for forming the milling cutter to obtain a specific section can be applied both to milling cutters that are mounted on a shaft or core with a hole or on shafts with a handle.
- As the cutting is progressive or fractioned, the power needed to move the tool is less, thus the energy consumption drops.
- The cutting elements are very small and upon being easy to handle, the total cost thereof is low and better materials can be used.

## BACKGROUND OF THE INVENTION

Presently milling cutters are normally built in a single piece therefore the same would become unusable if it is dented and it cannot be sharpened.

This causes such tools to be so expensive.

As to the form of the tools it depends on whether they are used for cutting wood, metal, as well as whether they are fed manually, semi-automatically or automatically.

Helical cutters used to mechanize metals are also known. Such materials require progressive cutting that is not as direct as with wood. Such cutters are comprised of a plurality of discs that are placed in an adjustable arrangement with nonrotating coupling upon a core of a milling cutter support , the teeth remaining helically staggered.

## DESCRIPTION OF THE INVENTION

In broad outline, the improvements introduced in the manufacture of milling cutters, that the invention proposes, even being of the type of milling cutters that is constituted from tje juxtaposition of different discs or modules fastened by means of a cotter way to the center core, has enormous advantages since it permits mechanization of pieces with any cutting section. Each one of the discs makes the cut in the part of the corresponding section, which may be straight, staggered, semicircular, etc.

The fastening angle between the different modules, in other words, the angular displacement between the teeth of a cutting disc and the contiguous one, is defined by the mathematical ratio:

$$\alpha = \pm 180/Z\ (1 + 2n)$$

wherein

$\alpha$ = displacement angle of the cotter ways

Z = the number of cuts or arms of each one of the discs or modules

n = any whole number, which makes it possible to align the surfaces of the cuts in a plane in order to be sharpened or resharpened for maintenance thereof.

The modules can have different diameters depending on the needs of the section that is going to be milled.

These modules descend millimeter by millimeter into the outer diameter thereof, but they always keep their inside dimension and angular distance between the arms supporting the cutting elements or teeth.

The cotters set the placement of the modules in the center bushing or support for fastening the milling cutter supports. The discs have in the ends of the cuts that define the arms, some elements or pieces welded or fastened mechanically which after profiling and sharpening thereof, they will constitute the cutting blades, each blade having to cut only a small sector of the section to be milled, as we have indicated above.

In order to provide a better understanding of the features of the invention and forming an integral part of this specification, some sheets of drawings in whose figures, the following has been represented in an illus trative and non-restrictive manner, are attached hereto:

## BRIEF DESCRIPTION OF THE DRAWINGS

Figure 1.- It is a plan view of a group of juxtaposed milling cutters to obtain a specific cutting section.

Figures 2 and 3.- They are plan views of the modular milling cutters with which the multiple milling cutter of figure (1), on a reduced scale, is formed.

Figures 4, 5 and 6.- They are different partial views of different cutting sections, obtained by juxtaposition of modules, in accordance with the invention.

## DESCRIPTION OF THE PREFERRED EMBODIMENT

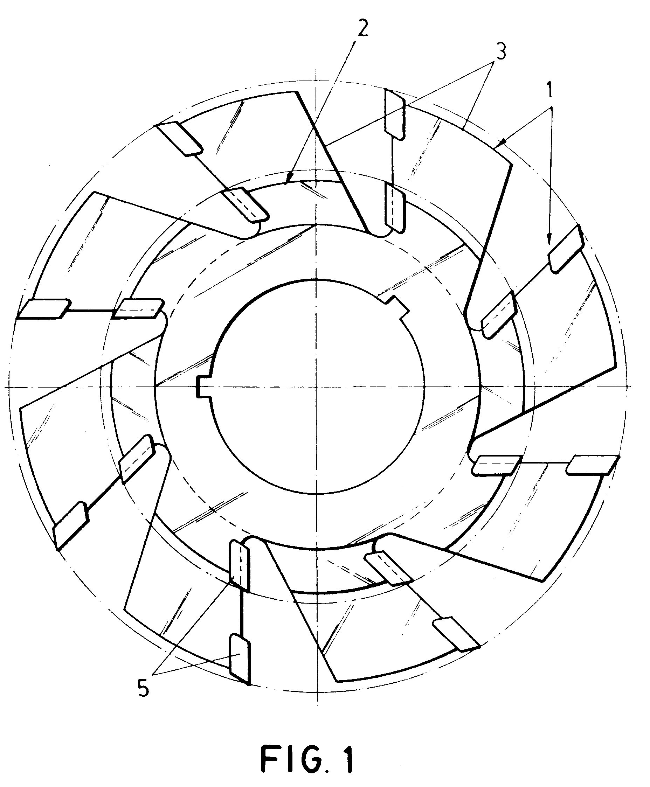

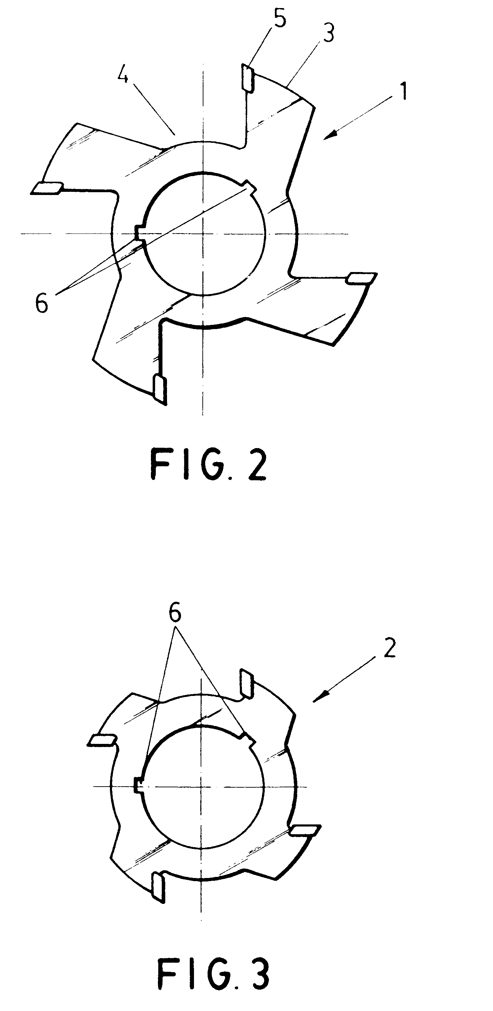

Referring to the numbering used in the figures, we can see how the improvements introduced in the manufacture of milling cutters, that constitute the object of the invention, are achieved due to the fact that the cutting section of the milling cutter is obtained by means of a plurality of modular elements, such as those referred to as (1) and (2) in figures 1 to 3. In this embodiment all the modules include four arms (3) uniformly distributed anglewise and defined between the cuts (4) or intermediate spaces. The cutting blades (5) are included in the arms (3.)

The modules are provided with cotter ways (6) displaced in this case 135$\underline{o}$, thus, they can be mounted in forward positions of the milling cutter support, just as it is shown in figure 1.

In figure 1, we can see two modules (2) and two modules (1) displaced 45$\underline{o}$, whereby in the plan projection eight arms (3) are shown, four for each module (1.)

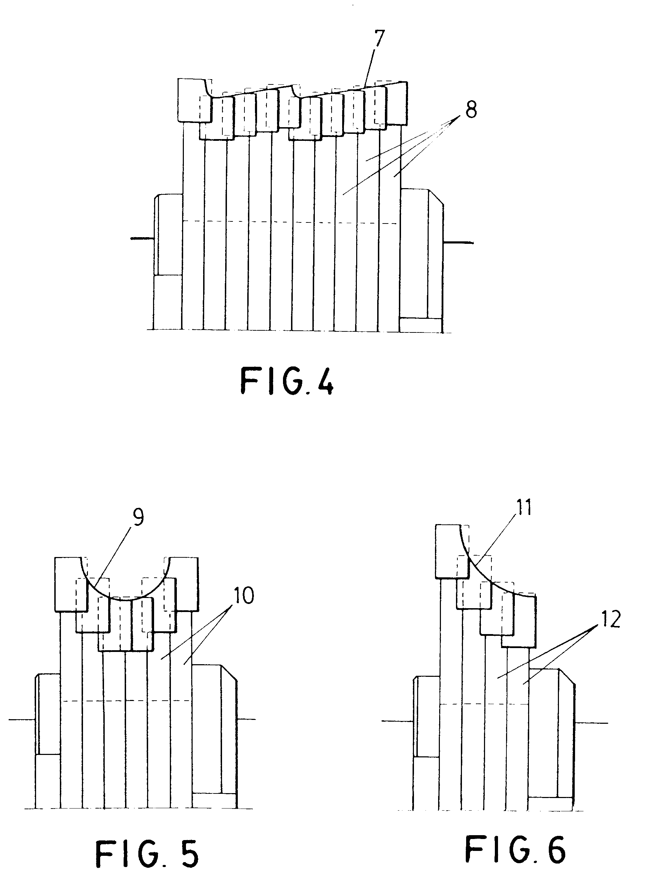

In figure 4 we can see a milling cutter built in accordance with the invention, with which a section (7) can be mechanized obtained with ten modules or discs (8), perfectly blocked and turning jointly by means of the cotter ways (6). The cutting elements (5) are profiled to achieve that each one of them carries out the milling corresponding to section (7.) The section can thus be changed upon varying the location of the modules (8), or else placing an intermediate one whose edge is in accordance with the new section to be achieved.

In figure 5 we can see the way in which a semicircular section (9) is achieved, by means of six discs (10) whose cutting pieces have a mechanization to define an edge corresponding to the part of the section that are to mechanize.

The materials to be milled can be from any type of wood to plastics, resins, etc., even metal, and it is possible to manufacture in series different modules since it is not necessary to mechanize a complete or whole milling cutter with the desired section, but rather it can be achieved by juxtaposition of different number of modules and profiling the blades or cutting elements (5), in accordance with the section (4) to be milled.

In figure 6 we can see how a piece with an arched section (11) is mechanized, four modules (12) intervening.

In all of the cases shown in figures 4 to 6, the different modules (8) (10) and (12) are displaced in terms of the milling cutter support, given that as we have seen above the displacement angle between the cotter ways thereof, depends on the number of arms, obtaining the value thereof with the above cited formula $\alpha = \pm 180/Z \, (1 + 2n.)$

All of the modules of a single milling cutter maintain an identical number of arms and the same size of the inside recess, as well as the angular distance between the cotter ways thereof, to obtain correct mounting of the milling cutter.

With this arrangement, each blade only has to cut a small sector of the section to be milled. Alternately the different strips of the resulting mechanization are cut.

Distance washers that make it possible to vary or adjust the cutting section of the milling cutter to that of the new piece to be mechanized, which is possible thanks to the fact that the width of the cutting blades is greater than the thickness of the module, there being overlapped portions though they are displaced anglewise, can be mounted between the modules.

## Claims

1. Improvements introduced in the manufacture of milling cutters, which are of the type that are formed by the juxtaposition of different discs or modules, fastened by means of a cotter way to a center core, characterized in that irrespective of whether the cut is straight or it determines the formation of a characteristic curvilinear or combined section, the $\alpha$ fastening angle between the different elements is defined by the ratio

$\alpha = \pm 180/Z \, (1 + 2n)$, wherein

$\alpha$ = displacement angle of the cotter ways

$Z$ = number of cuts or arms of the module

$n$ = any whole number

the modules being able to have different diameters depending on the needs of the section to be milled, descending even millimeter by millimeter in the outer diameter thereof, but maintaining the number of arms as well as the inside dimension thereof and each one of the discs carrying out the corresponding part of the section to be milled, whereby modules of a specific diameter can be mounted and blades can be profiled according to the desired section.

FIG. 1

FIG. 2

FIG. 3

FIG.4

FIG. 5

FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | US-A-1 428 308 (WIARD) <br> * page 1, line 92 - line 101; figures 1,3 * <br> --- | 1 | B23C5/00 <br> B23C5/08 <br> B27G13/00 |
| A | CH-A-480 926 (OERTLI) <br> --- | | |
| A | CH-A-236 811 (BEERLI) <br> --- | | |
| A | DE-C-163 148 (SCHRADER) <br> --- | | |
| A | US-A-3 986 543 (SLAYTON) <br> ----- | | |
| | | | TECHNICAL FIELDS SEARCHED (Int.Cl.5) <br><br> B23C <br> B27G |

The present search report has been drawn up for all claims

| Place of search | Date of completion of the search | Examiner |
|---|---|---|
| THE HAGUE | 11 May 1994 | Bogaert, F |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)